Europäisches Patentamt

European Patent Office

Office européen des brevets

(19)

(11) Veröffentlichungsnummer: **0 117 487**

**B1**

(12) # EUROPÄISCHE PATENTSCHRIFT

(45) Veröffentlichungstag der Patentschrift:
**19.04.89**

(21) Anmeldenummer: **84101592.8**

(22) Anmeldetag: **16.02.84**

(51) Int. Cl.⁴: **H 04 R 5/02, H 04 N 5/64**

(54) **Fernsehgerät mit internem Tieftonlautsprecher.**

(30) Priorität: **22.02.83 DE 8304832 U**

(43) Veröffentlichungstag der Anmeldung:
**05.09.84 Patentblatt 84/36**

(45) Bekanntmachung des Hinweises auf die Patenterteilung:
**19.04.89 Patentblatt 89/16**

(84) Benannte Vertragsstaaten:
**BE FR GB IT NL**

(56) Entgegenhaltungen:
**CH-A-303 107
DE-B-1 084 303
FR-A-2 387 562
FR-E-55 121
GB-A-735 402
GB-A-2 102 243**

(73) Patentinhaber: **Deutsche Thomson- Brandt GmbH, Hermann- Schwer- Strasse 3 Postfach 1307, D-7730 Villingen- Schwenningen (DE)**

(72) Erfinder: **Schinnerling, Peter, Oberer Sonnenbühl 16, D-7730 VS- Pfaffenweiler (DE)**

## Beschreibung

Die Erfindung betrifft eine Lautsprecheranordnung gemäß dem Oberbegriff des Anspruchs 1.

Bekanntlich wird neuerdings bei der Entwicklung von Fernsehgeräten eine möglichst gute Tonwiedergabe angestrebt. Dazu verwendet man hochwertige Endstufen, z.T. sogar solche, die der HiFi-Norm entsprechen. Die Unterbringung und Anordnung dafür tauglicher Lautsprecher ist jedoch problematisch.

Um die Breite von Fernsehgeräten, insbesondere bei kleinen, tragbaren und gleichzeitig billigeren Geräten, in erträglichen Grenzen zu halten, werden neben der Bildröhre angebrachte Bedienteile, Fernsteuerungsempfänger etc. so schmal wie möglich konstruiert. Das hat zur Folge, daß das frontale Lautsprecherfeld, insbesondere bei Stereogeräten, ebenfalls sehr schmal ist. Für eine zu fordernde Baßwiedergabe, möglicherweise nach HiFi-Norm, ist jedoch die Membranfläche des Tieftonlautsprechers und der Weg des aktustischen Kurzschlusses verantwortlich. Die Tiefenabstrahlung kleiner Tieftonlautsprecher, auch ovaler Speziallautsprecher, die frontseitig abgeordnet sind und somit direkt auf den Zuhörer ebenso abstrahlen wie Hochton- und Mittelhochtonlautsprecher, ist in der Tat unbefriedigend.

Zur Lösung dieses Problems wurden viele Lösungen bekannt, die aber alle kostenaufwendig sind und die zuvor genannten Forderungen nur teilweise erfüllen.

Aus der GB-PS-2 102 243 beispielsweise ist ein stereo-taugliches Fernsehgerät bekannt, das nach vorne abstrahlende Hochtöner rechts und links vom Bildschirm sowie je eine Bassreflexöffnung von im Gehäuse jeweils an den Seitenwänden befestigten und durch öffnungen in den Seitenwänden abstrahlenden Bassreflex-Boxen aufweist. Diese Lösung erlaubt ein relativ schmales Feld seitlich vom Bildschirm. Es benötigt aber seitliche öffnungen im Gehäuse und dafür meist Verkleidungen, z. B. ein Plastikgrill. Aunerdem sind zwei Boxen eine teure Lösung, die für tragbare kleinere Geräte nicht in Frage kommt.

Aus der Zeit geringer Oualitätsansprüche der Tonwiedergabe bei Fernsehgeräten sind Lösungen mit einem Lautsprecher für den ganzen Tonfrequenzbereich bekannt geworden, die nicht an der Frontseite neben dem Bildschirm und auch nicht an der Seitenwand des Gerätegehäuses angebracht waren. Sie ermöglichen kompakte Abmessungen des Fernsehgerätes. Aus der CH-PS-303 107 ist es bekannt, den Tiefton-Lautsprecher auf einer Schallwand an der Rückwand (s. Anspruch 13) und somit nach hinten abstrahlend vorzusehen. Es ist nicht vorgesehen durch etwa vorhandene Lüftungslöcher oder -schlitze abzustrahlen. Für die monophone Abstrahlung ist ein nach vorne abstrahlender Hochtöner vorgesehen. Für heutige Anforderungen wäre die Lösung nach der GB-PS-735 402 nicht akzeptabel. Diese Art und Weise des Einbaus des einzigen Lautsprechers auf dem Gehäuseboden und zwar nach unten abstrahlend ist für den höheren Tonbereich, wie zugegeben wird, nachteilig. Hierbei versuchte man den nach unten austretenden Schall nach vorne umzulenken durch entsprechend gerichtete Schallführungen. Für die höheren Tonfrequenzen war das keine gute Lösung, sie wurden, da sie gerichtet nach vorne aus dem Lautsprecher austreten, zu stark bekämpft.

Der vorliegenden Neuerung lag deshalb die Aufgabe zugrunde, eine Lösung ohne Verteuerung bei gleichzeitig guten akustischen Eigenschaften zu finden, die gleichzeitig akzeptable Gehäusediensionen erlaubt und keine zusätzlichen Gehäusedurchbrüche zur Abstrahlung nach der Seite oder nach vorne benötigt.

Diese Aufgabe wird gemäß der Erfindung durch die im Anspruch 1 aufgeführten Merkmale gelöst.

Weitere Einzelheiten und Ausgestaltungen sind den Unteransprüchen sowie der nachfolgenden Beschreibung zu entnehmen. Da keine richtungsabhängige Abstrahlung der tiefen Frequenzen stattfindet und somit die akustische Ortung nicht direkte Abstrahlung notwendig macht, kann der als Subwoofer für etwa 40 bis 200 oder 300 Hz im vorhandenen Raum des Fernsehgerätegehäuses, auch im ungenutzten Raum der Rückwand, angeordnet werden. Ist der Tieftöner ohne Box vorgesehen, muß er so montiert sein, daß er die Tiefenabstrahlung ermöglicht. Dabei wirkt die Montageplatte für den Tieftöner, z. B. die Bodenplatte, ein Teil der Rückwand, eine Trennwand, als Schallwand, indem so der akustische Kurzschluß zwischen Vorder- und Rückseite der Membran verhindert wird. Da in diesem Frequenzbereich keine Stereo-Ortung stattfindet, kann der Subwoofer die tiefen Frequenzen beider Stereokanäle verarbeiten. Vorteilhafterweise entstehen so keine Extrakosten für einen zweiten Tieftöner bzw. eine zweite Box. Es können in der Rückwand und/oder der Bodenplatte des Gerätegehäuses ohnehin vorhandene Schlitze oder öffnungen anderer Form verwendet werden, weil die Abstrahlung dieses Frequenzbereiches einwandfrei auch indirekt, da ungerichtet, funktioniert.

Die Erfindung wird nachfolgend anhand der Zeichnung beschrieben. Diese zeigt in

Figur 1    eine vereinfachte, aufgeschnittene Seitenansicht eines Gehäuses mit auf der Bodenplatte montiertem Tieftöne;

Figur 2    eine Seitenansicht eines Fernsehgerätes mit geschnittener Rückwand;

Figur 3    eine Seitenansicht eines Fernsehgerätes mit geschnittener Rückwand;

Figur 4    eine teilweise aufgeschnittene Seitenansicht eines Fernsehgerätes;

Figur 5    eine Rückansicht eines Fernsehgerätes mit abgenommener Rückwand und einer Trennwand im oberen Drittel, horizontal angeordnet;

Figur 6   eine Rückansicht eines von hinten offenen Fernsehgerätes mit einer vertikalen Trennwand im oberen Drittel, die parallel zur Gehäusefront verläuft;

Figur 7   eine Rückansicht eines Teiles eines von hinten offenen Fernsehgerätes mit einer vertikalen Trennwand die parallel zu einer Seitenwand angeordnet ist.

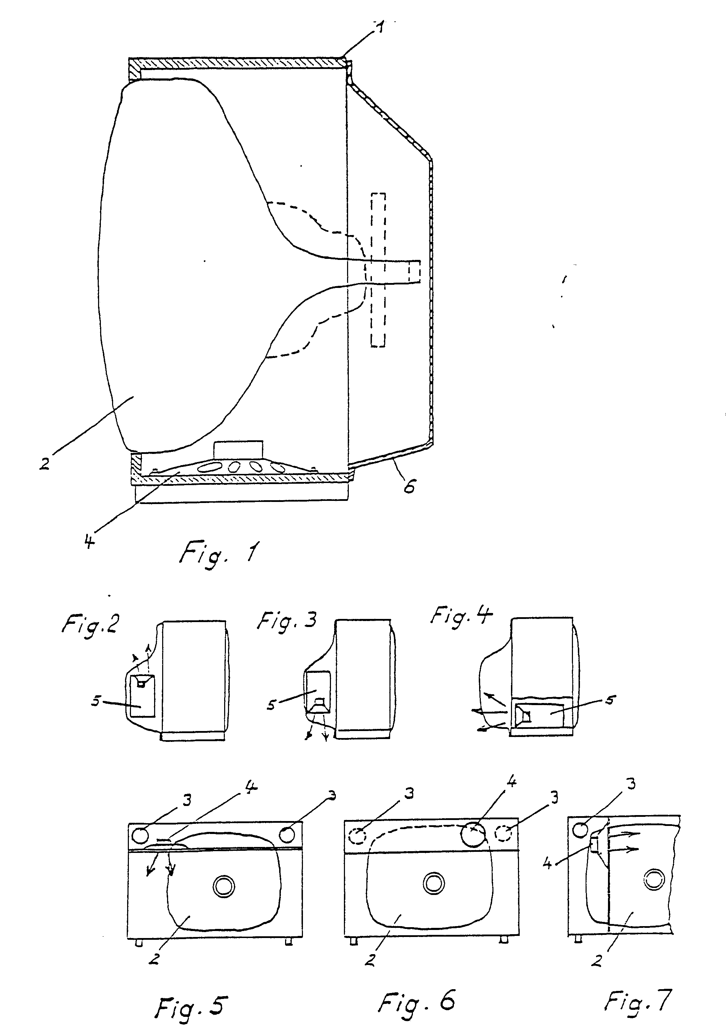

Die Figur 1 zeigt ein Fernsehgerät mit dem Gehäuse 1, der Rückwand 6, der angedeuteten Bildröhre 2 und einem auf der Bodenplatte des Gehäuses 1 montierten Tiefton-Lautsprecher 4, der über ohnehin in der Bodenplatte vorhandene Lüftungslöcher oder Schlitze nach unten abstrahlt. Es ist dazu erforderlich, daß die Grundplatte Füße oder Fußleisten aufweist. Da die Rückwand von Fernsehgeräten üblicherweise mit einer Vielzahl von Lüftungsöffnungen versehen ist, kann sich der vom Lautsprecher 4 im Gehäuseinneren austretende Schall ungehindert nach außen ausbreiten. In der Darstellung sind Hochtonlautsprecher nicht sichtbar.

Die Figuren 2 und 3 lassen innerhalb des freien Raums der Rückwand 6 jeweils eine nach oben oder unten abstrahlende Tieftonbox 5 erkennen, die zur Verdeutlichung ebenso wie die Rückwand 6 durchsichtig dargestellt wurde.

Figur 4 zeigt als Alternative den Einbau einer Tieftonbox 5 innerhalb des Gehäuses 1 mit nach hinten gerichteter Abstrahlung. Die Pfeile sollen die jeweilige Abstrahlrichtung anzeigen.

Die Figuren 5, 6 und 7 verdeutlichen drei Lösungsmöglichkeiten mit einer im Gehäuse 1 des Fernsehgerätes montierten partiellen Trennwand 7, die den Tieftöner 4 jeweils trägt und an der Stelle seiner Befestigung eine übliche Öffnung aufweist. Diese ist nur in Figur 6 sichtbar. Die Bezugsziffern für die Dildröhre 2, Rückwand 6 und Lautsprecher 4 entsprechen den in Figur 1 verwendeten. Nach vorne abstrahlende Hochtöner 3 sind eingezeichnet.

Alle gezeigten Lösungsbeispiele benötigen und verwenden keine zusätzlichen Gehäuseöffnungen für die ungerichtete Abstrahlung der tiefen Frequenzen. Diese Art der Abstrahlung ist dabei deshalb möglich, weil keine akustische Richtungs-Ortung dieser Frequenzen möglich ist.

**Patentansprüche**

1. Lautsprecheranordnung eines Fernsehgerätes, die mehr als einen Lautsprecher für monophone bzw. mehr als zwei Lautsprecher für stereophone Wiedergabe aufweist und deren Hochton- und gegebenenfalls Mittelhochtonlautsprecher an der Gerätefrontseite angeordnet sind und somit etwa zum Zuhörer hin direkt abstrahlen, wobei für die Tieftonwiedergabe ein Tiefton-Lautsprecher (4) oder eine geschlossene Tiefton-Box (5) vorgesehen ist, der oder die mit beliebiger Abstrahlrichtung im Fernsehgerätegehäuse (1) angeordnet ist, dadurch gekennzeichnet, daß für die Schallabstrahlung die in der Rückwand und/oder der Bodenplatte des Gehäuses (1) ohnehin zur Gerätebelüftung vorhandenen Öffnungen ausgenutzt werden.

2. Lautsprecheranordnung nach Anspruch 1, dadurch gekennzeichnet, daß der Tieftonlautsprecher (4) oder die Tieftonbox (5) als Subwoofer konzipiert und angeschlossen ist, indem etwa ein Frequenzbereich von 40 bis 200 oder 300 Hz abgestrahlt wird, der ggf. aus beiden Stereokanälen gespeist wird.

3. Lautsprecheranordnung nach Anspruch 2, dadurch gekennzeichnet, daß der Tiefton-Lautsprecher (4) oder die Subwoofer-Box (5) im ungenutzten, freien Raum innerhalb der Rückwand (6) angeordnet ist.

4. Lautsprecheranordnung nach Anspruch 1, dadurch gekennzeichnet, daß der Tiefton-Lautsprecher (4) auf einer Trennwand (7) im Gerätegehäuse (1) angeordnet ist und aus den vorhandenen Rückwandperforationen abstrahlt.

**Claims**

1. A loudspeaker arrangement for a television set which comprises more than one loudspeaker for monophonic or more than two loudspeakers for stereophonic reproduction and of which the treble and possible medium high-pitch loudspeakers are disposed at the front of the set and thus radiate substantially directly towards the listener, while a bass loudspeaker (4) or a closed woofer box (5) is provided for the bass reproduction and is disposed in the housing (1) of the television set with any direction of radiation, characterised in that the openings present in any case in the rear wall and/or the base plate of the housing (1) to ventilate the set are used for the sound radiation.

2. A loudspeaker arrangement according to Claim 1, characterised in that the bass loudspeaker (4) or the woofer box (5) is designed and connected up as a subwoofer in that a frequency range from about 40 to 200 or 300 Hz is radiated and may be fed from both stereo channels.

3. A loudspeaker arrangement according to Claim 2, characterised in that the bass loudspeaker (4) or the subwoofer box (5) is disposed in the unused, free space inside the rear wall (6).

4. A loudspeaker arrangement according to Claim 1, characterised in that the bass loudspeaker (4) is mounted on a partition (7) in the housing (1) of the set and radiates out of the perforations present in the rear wall.

## Revendications

1. Dispositif à haut-parleurs d'un appareil de télévision, qui comporte plus d'un haut-parleur pour la restitution monophonique ou plus de deux haut-parleurs pour la restitution stéréophonique et dont le haut-parleur pour les aiguës et éventuellement le haut-parleur pour les aiguës moyennes sont disposés sur la face avant de l'appareil et émettent par conséquent approximativement en direction de l'auditoire, et dans lequel pour la reproduction des graves il est prévu un haut-parleur pour les graves (4) ou une enceinte (5) pour les graves, qui est disposée dans le boîtier (1) de l'appareil de télévision, avec une direction quelconque de rayonnement, caractérisé en ce que pour l'émission du son, on utilise les ouvertures présentes dans la paroi arrière et/ou dans la plaque de base du boîtier (1) servant à réaliser l'aération de l'appareil.

2. Dispositif à haut-parleurs selon la revendication 1, caractérisé en ce que le haut-parleur pour les basses (4) ou l'enceinte pour les basses (5) est conçu et raccordé à la manière d'un Subwoofer, avec lequel l'émission s'effectue approximativement dans une plage de fréquences de 40 à 200 ou 300 Hz et qui est alimenté éventuellement par deux canaux stéréo.

3. Dispositif à haut-parleurs selon la revendication 2, caractérisé en ce que le haut-parleur pour les basses (4) ou l'enceinte Subwoofer (5) est disposé dans l'espace libre inutilisé à l'intérieur de la paroi arrière (6).

4. Dispositif à haut-parleurs selon la revendication 1, caractérisé en ce que le haut-parleur pour les basses (4) est disposé sur une paroi de séparation (7) située dans le boîtier (1) de l'appareil et émet à partir des perforations présentes dans la paroi arrière.

Fig. 1

Fig.2

Fig. 3

Fig. 4

Fig. 5

Fig. 6

Fig. 7

1